Europäisches Patentamt

European Patent Office

Office européen des brevets

(11) Publication number: **0 461 699 A1**

# EUROPEAN PATENT APPLICATION

(21) Application number: **91201342.2**

(22) Date of filing: **31.05.91**

(51) Int. Cl.5: **B22F 3/12, C04B 35/64**

(30) Priority: **13.06.90 NL 9001342**

(43) Date of publication of application:
**18.12.91 Bulletin 91/51**

(84) Designated Contracting States:
**DE FR GB NL**

(71) Applicant: **SKF Industrial Trading &
Development Co, B.V.
Kelvinbaan 16**
**NL-3439 MT Nieuwegein(NL)**

(72) Inventor: **Noordman, Maarten J.
Bazelstraat 9
Hilversum(NL)**

(74) Representative: **Merkelbach, B.
SKF Engineering & Research Centre B.V.
P.O. Box 2350 Kelvinbaan 16
NL-3430 DT Nieuwegein(NL)**

(54) **Method for manufacturing a container containing a material in powder form, which can be subjected to a high isostatic pressure at a high temperature.**

(57) High Isostatic Pressure (HIP) containers are costly and difficult to make. To overcome these disadvantages the improved arrangement is thereto characterised in that in a quartz tube (1) a pre-compressed powder (2) is conveyed. The closed end part (1') is fitted in holder (7); the open end-part (1") is connected with member (3) which forms a part of slip-coupling (4) of motor (5). The open end-part (1") is connected with a vacuum-pump (6') in order to create a vacuum when making the HIP-tube (1,2). A burner (8) is arranged around said HIP-tube to cut-off the tube close to the powder bar (2). The method of making the tube (1,2) is as follows: After the creation of vacuum in said tube it is subjected to heating until its plasticity is reached due to which the powder (2) is tightly enclosed. The end-part (1') fixed in holder (7) stands still whilst the tube-part outside the powder bar (2) is heated and simultaneously (slowly) rotated by motor (5) via slip-coupling (4) and member (3) until this tube-part breaks-off forming the closed end.

fig-1

The invention concerns a method for enclosing an amount of a material in powder form previously compacted into a cohesive body, by means of a holder made of quartz glass or similar, in order to create a container which can be subjected to a high isostatic pressure so that the amount of material in powder form can be shaped into a homogeneous solid body.

In a known method for the manufacture of a similar container, quartz powder is sprinkled on the body formed by an amount of previously compacted material in powder form (± 40-50% density), and the body is subsequently placed in a vacuum oven in which the quartz powder melts into a cohesive skin which wraps around the material in powder form. The material in powder form is previously compacted in order to prevent, among others, excessive shrinkage when the isostatic pressure takes effect.

This method is very complicated and expensive.

The purpose of the invention is to create a simpler and cheaper method.

The purpose is achieved by the fact that with the method according to the invention, the amount of previously compacted material is placed inside one end of a tube of quartz glass or similar, which tube is closed at that end, while the rest of the tube remains empty, following which a negative pressure is generated inside the tube and the tube is heated until it becomes plastic and, as a result, wraps around the material in powder form; subsequently, the one end of the tube is held in place while the other end is rotated, whereby the empty part of the tube is heated until the aforementioned plastic state is achieved, as a result of which the empty part is twisted or twirled together, thereby forming a closure for the part of the tube which contains the material in powder form, so that when the material in powder form is exposed to a negative pressure, it is entirely enclosed by the tube material.

In an advantageous manner, after the insertion in the tube of the material in powder form, the tube is clamped with its open end into a rotatable head and, through this head, a negative pressure is generated inside the tube by means of a vacuum pump while, in order to twist the empty end of the tube, the head is made to rotate while the other end of the tube is held by a wrench-type tool.

Said head is preferably connected to a motor by way of a clutch coupling as intermediate connection, executed in such manner that, when the other end of the tube is held in place, the tube is made to rotate together with the head solely when the empty part of the tube is in a plastic state. This prevents the tube from breaking before it has become sufficiently plastic to be twisted together.

The tube is heated in an advantageous manner by means of a radial burner.

The invention is further explained with reference to the drawing in which:

Figure 1     is a schematic illustration of the method according to the invention, and

Figure 2     shows a container obtained with this method.

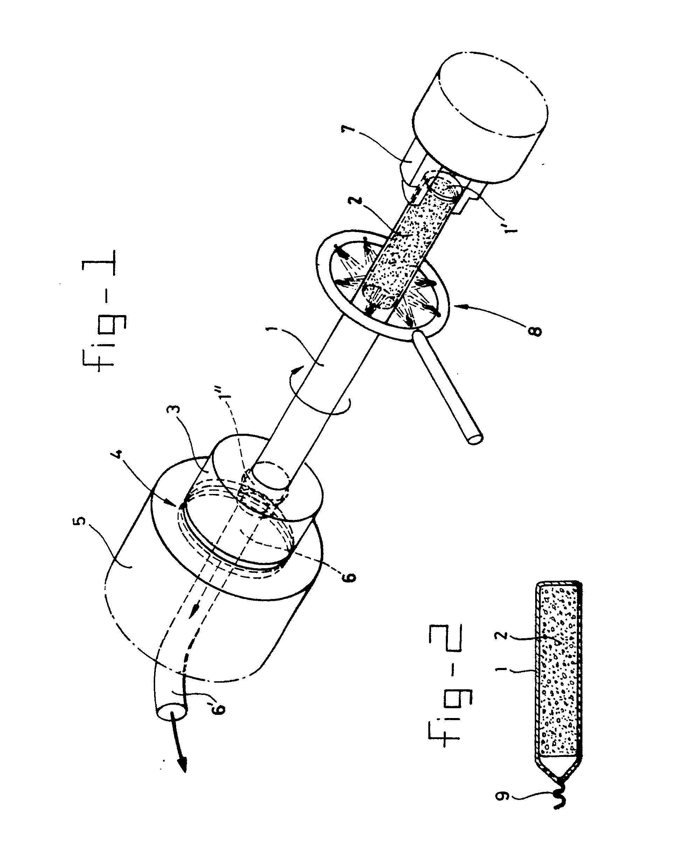

As shown in Figure 1, an amount of a material 2 in powder form and previously compacted into a cohesive body is placed in a tube 1 of quartz glass or similar, which is closed at the end 1'. With its other open end 1" the tube 1 is clamped into a rotatable head 3, which head 3, by way of a clutch coupling 4, is connected to a motor 5 by means of which the rotatable head 3 can be made to rotate. A pipe 6 extends through the rotating head 3 as far as the open end 1" of the tube 1 and continues as pipe 6' which is connected to a vacuum pump, not shown here. An adjustable clamping device 7 is attached around the closed end 1' of the tube 1.

When the body of the material 2 in powder form is placed inside the tube 1 as shown in Figure 1, and the open end 1" of the tube 1 is clamped inside the rotatable head 3, a vacuum is generated inside the tube 1 by means of the vacuum pump by way of pipe 6', e.g., to $10^{-3}$ torr. Subsequently, tube 1 is heated by means of the radial heater 8 until the tube 1 enters a plastic state at about 1700-2000° C, so that the material 2 in powder form is entirely enclosed by tube 1. Subsequently, the motor 5 is turned on and the clamping device 7 is adjusted so that the closed end 2 of the tube is held in place while the empty part of the tube 1 is heated with the radial burner 8, exactly as far as where the material 2 in powder form begins, until this part becomes plastic so that, thanks to the clutch coupling 4, the empty part of the tube 1 is rotated together with the rotatable head 3 while the filled end of the tube 1 stands still, so that the empty part of the tube 1 is twisted or twirled together to form a closure 9 as shown in Figure 2.

## Claims

1. Method for enclosing an amount of a material in powder form previously compacted into a cohesive body, by means of a holder made of quartz glass or similar, in order to create a container which can be subjected to a high isostatic pressure so that the amount of material in powder form can be shaped into a homogeneous solid body, characterized by the fact that the amount of previously compacted material (2) is placed inside one end of a tube (1) of quartz glass or similar, which tube is closed at that end, while the rest of the tube remains empty, following which a negative pressure is generated inside the tube and the tube is heated until it becomes plastic and, as a result, wraps around the material in powder form (2); subsequently, the one end (1') of the tube is held in place while the other end (1") is rotated, whereby the empty part of the tube is heated until the aforementioned plastic state is achieved, as a result of which the empty part is twisted or twirled together, thereby forming a closure (9) for the part of the tube which contains the material in powder form, so that when the material in powder form is exposed to a negative pressure, it is entirely enclosed by the tube material.

2. Method according to Claim 1, characterized by the fact that, after the insertion in the tube of the material in powder form (2), the tube (1) is clamped with its open end (1") into a rotatable head (3) and, through this head, a negative pressure is generated inside the tube by means of a vacuum pump while, in order to twist the empty end of the tube, the head is made to rotate while the other end (1') of the tube is held by a wrench-type tool (7).

3. Method according to Claim 2, characterized by the fact that said head (3) is connected to a motor (5) by way of a clutch coupling as intermediate connection (4), executed in such manner that, when the other end (1') of the tube (1) is held in place, the tube is made to rotate together with the head (3) solely when the empty part of the tube is in a plastic state.

4. Method according to Claims 1 through 3, characterized by the fact that the tube is heated by means of a radial burner (8).

fig-1

fig-2

European
Patent Office

**EUROPEAN SEARCH
REPORT**

Application Number

**EP 91 20 1342**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-3 047 237 (DEUTSCHE FORSCHUNGS- UND VER-SUCHSANSTALT FÜR LUFT- UND RAUMFAHRT) <br> * example 1 * <br> — — — | 1-4 | B 22 F 3/12 <br> C 04 B 35/64 |
| A | DE-A-2 250 139 (ASEA) <br> * claim 1 * <br> — — — | 1-4 | |
| A | EP-A-0 244 135 (ASEA) <br> * column 4, line 34 - line 50; claim 1 * <br> — — — | 1-4 | |
| A | DE-C-5 072 13 (F. MEYER) <br> * claims 1,3 * <br> — — — — — | 1-4 | |
| | | | **TECHNICAL FIELDS SEARCHED (Int. Cl.5)** |
| | | | B 22 F <br> C 03 B <br> C 04 B |

The present search report has been drawn up for all claims

| Place of search | Date of completion of search | Examiner |
|---|---|---|
| The Hague | 17 September 91 | SCHRUERS H.J. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

&: member of the same patent family, corresponding
document